# EUROPÄISCHE PATENTSCHRIFT

(11) **EP 2 879 960 B1**
(45) Veröffentlichungstag und Bekanntmachung des Hinweises auf die Patenterteilung: **13.11.2019**
(21) Anmeldenummer: 13752821.2
(22) Anmeldetag: 31.07.2013
(51) Int. Cl.: B65B 3/02, B29C 49/12, B29C 49/46

(54) **VERFAHREN SOWIE VORRICHTUNG ZUM HERSTELLEN VON EINEM FLÜSSIGEN FÜLLGUT GEFÜLLTEN BEHÄLTERN**
METHOD AND DEVICE FOR PRODUCING CONTAINERS FILLED WITH A LIQUID FILLING MATERIAL
PROCÉDÉ ET DISPOSITIF DE FABRICATION DE CONTENANTS REMPLIS D'UN PRODUIT LIQUIDE

(30) Priorität: 01.08.2012 DE 102012015087
(43) Veröffentlichungstag der Anmeldung: 10.06.2015
(73) Patentinhaber: KHS GmbH, 44143 Dortmund (DE); KHS Corpoplast GmbH, 22145 Hamburg (DE)
(72) Erfinder: KLATT, Dieter, 22147 Hamburg (DE); HAESENDONCKX, Frank, 22145 Hamburg (DE); CLÜSSERATH, Ludwig, 55543 Bad Kreuznach (DE); HÄRTEL, Manfred, 67685 Weilerbach (DE); EHMER, Wilfried, 44227 Dortmund (DE)
(74) Vertreter: Meissner Bolte Partnerschaft mbB
(86) Internationale Anmeldenummer: PCT/EP2013/002268
(87) Internationale Veröffentlichungsnummer: WO 2014/019691

(56) Entgegenhaltungen:
- EP-A1- 0 375 912
- WO-A1-2011/076167
- WO-A2-2007/120807
- US-B1- 6 502 369

## Beschreibung

Die Erfindung betrifft ein Verfahren zur Herstellung von mit einem flüssigen Füllgut gefüllten Behältern aus Vorformlingen aus einem thermoplastischen Material, wobei der jeweilige Vorformling thermisch konditioniert und anschließend während einer Form- und Füllphase in einer Form mit wenigstens einem flüssigen Füllgut als Druckmedium in den Behälter umgeformt wird. Die Erfindung betrifft ferner eine Vorrichtung zur Herstellung von mit einem flüssigen Füllgut gefüllten Behältern aus Vorformlingen aus einem thermoplastischen Material, mit einer Heizstrecke zum Vorheizen der Vorformlinge, mit wenigstens einer eine Form aufweisenden Form- und Füllstation, mit wenigstens einer Vorratseinrichtung zur Bereitstellung des Füllgutes, wobei vorzugsweise eine Karbonatisierungseinheit zum Einbringen oder Lösen von Kohlendioxid zumindest in einen Teilstrom des Füllgutes vorgesehen ist.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE-OS 43 40 291). Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation ist in der DE-OS 42 12 583 beschrieben. Möglichkeiten der Temperierung der Vorformlinge sind in der DE-OS 23 52 926 erläutert.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammen zu fassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen aus thermisch konditionierten bzw. vorerhitzten Vorformlingen herzustellen und dabei gleichzeitig mit einem flüssigen Füllgut zu füllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter verformt wird. Derartige Verfahren, bei denen ein gleichzeitiges Formen und Füllen des jeweiligen Behälters erfolgt, können auch als hydraulische Ausformverfahren oder hydraulische Behälterformung bezeichnet werden.

Die WO 2011/076167 A1 offenbart ein Verfahren zur Herstellung von mit einem flüssigen Füllgut gefüllten Behältern aus Vorformlingen aus einem thermoplastischen Material, wobei der jeweilige Vorformling thermisch konditioniert und anschließend während einer Form- und Füllphase in einer Form mit wenigstens einem flüssigen Füllgut als Druckmedium in den Behälter umgeformt wird, wobei das Füllgut oder Anteile des Füllgutes in zumindest zwei Prozessphasen mit unterschiedlichen Temperaturen zugeführt werden. Bei einem Formen der Behälter aus den Vorformlingen durch das Füllgut selbst, d.h. unter Verwendung des Füllgutes als hydraulisches Druckmedium wird für das Formen und Füllen der Behälter nur noch eine Maschine benötigt, die dafür allerdings eine erhöhte Komplexität aufweist. Erste Versuchsergebnisse mit derartigen Einrichtungen zeigen allerdings, dass die Qualität der hergestellten Behälter noch deutlich unterhalb der Qualität von konventionell hergestellten blasgeformten Behältern liegt. Ursache hierfür ist u.a., dass eine Vielzahl von Prozessparametern, die bei der Durchführung des üblichen Blasformens verfügbar sind, bei der hydraulischen Behälterformung entweder nicht vorliegen oder noch nicht erschlossen werden konnten.

Eine besondere Problematik besteht bei der hydraulischen Behälterformung auch darin, dass eine Verschmutzung der jeweiligen Form- und Füllstation bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht im besonderem Maße die Gefahr einer Verschmutzung der jeweiligen Form- und Füllstation durch Füllgutverluste, insbesondere bei der Absenkung des Innendrucks des Behälters, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für CO₂-haltige Produkte bisher nicht zum Einsatz kommen konnte. Aufgabe der Erfindung ist es, ein Verfahren aufzuzeigen, welches bei dem hydraulischen Ausformverfahren bzw. bei der hydraulischen Behälterformung die Gefahr eines Verschmutzens der jeweiligen Form- und Füllstation auch bei einem CO₂-haltigen Füllgut vermeidet, speziell auch bei hohen Durchsatzraten (Anzahl der geformten und gefüllten Behälter je Zeiteinheit) und/oder bei einem hohen CO₂-Gehalt des in den jeweiligen Behälter eingebrachten Füllgutes.

Zur Lösung dieser Aufgabe ist ein Verfahren zur Herstellung von mit einem flüssigen Füllgut gefüllten Behältern entsprechend dem Patentanspruch 1 ausgebildet. Eine Vorrichtung zur Herstellung von mit einem flüssigen Füllgut gefüllten Behältern ist Gegenstand des Patentanspruchs 18.

Bei dem erfindungsgemäßen Verfahren werden Vorformlinge aus einem thermoplastischen Material thermisch konditioniert und anschließend während einer Form- und Füllphase in einer Form mit wenigstens einem flüssigen Füllgut als Druckmedium in den Behälter umgeformt.

Dabei wird das Füllgut oder Anteile des Füllguts zumindest in zwei Zeitpunkten und/oder in zumindest zwei Prozessphasen mit unterschiedlichen Gehalten an Kohlendioxid und/oder mit unterschiedlichen Temperaturen zugeführt. Das erfindungsgemäße Verfahren ist insbesondere dadurch gekennzeichnet, dass in der zweiten Prozessphase Trockeneis, insbesondere in Form von Pellets, zugeführt wird.

Vorzugsweise wird dabei in einer Prozessphase zuvor entgastes Füllgut zugeführt. Der CO₂-Gehalt ist dann gleich null oder je nach Entgasungsgrad annähernd null.

Das Füllgut kann dann in der zweiten Prozessphase, in dem das Füllgut mit höherem Gehalt an Kohlendioxid zugeführt wird, carbonatisiert werden. Die Carbonatisierung erfolgt vollständig oder teilweise durch Zugabe von Kohlendioxid in Form von Trockeneis. Trockeneis kann in Form von Pellets zugeführt werden, und zwar beispielsweise an der Füllgutoberfläche oder im Bereich des Behälterbodens. Das Trockeneis kann in das Füllgut eingelegt oder in das Füllgut eingeschossen werden.

Ergänzend kann die Carbonatisierung auch teilweise bei mindestens 1 bar, vorzugsweise zwischen 1 und 2 bar über dem jeweiligen Sättigungsdruck, der von der Temperatur des Füllguts abhängig ist, erfolgen.

Um eine möglichst hohe Produktqualität sicherzustellen, erfolgt bevorzugt eine Führung des jeweiligen Vorformlings bei seiner Umformung in eine sich entwickelnde Behälterblase und anschließend in den die endgültige Kontur oder Formgebung aufweisenden Behälter, so dass ein typischerweise im Bereich einer Vorformlingskuppe angeordnetes Zentrum definiert und reproduzierbar positioniert wird. Eine derartige definierte Positionierung ist wichtig, da bei der Umformung bzw. Aufweitung des Vorformlings in den Behälter eine biaxiale Orientierung des Materials des Vorformlings durchgeführt wird und hierfür eine gezielte und vorgebbare Materialverteilung innerhalb der Wandung des geformten Behälters erforderlich ist. Bei einer unkontrollierten Behälterformung sind hingegen unerwünschte und insbesondere ungleichmäßige Materialverteilungen zu erwarten. Eine besonders wirkungsvolle Führung während der Form- und Füllphase ist durch die Verwendung eines Reckstabes oder einer Reckstange möglich, wobei das Füllgut beispielsweise mindestens teilweise durch die Reckstange hindurch zugeführt werden kann. Alternativ oder ergänzend kann das Füllgut auch mindestens teilweise an der Reckstange vorbei zugeführt werden.

Eine gleichmäßige hydraulische Behälterformung kann dadurch erreicht werden, dass das Füllgut mindestens zeitweilig mit einem konstanten Volumenstrom zugeführt wird. Möglichkeiten zur Beeinflussung der Materialverteilung innerhalb der Wandung des entstehenden oder ausgeformten Behälters werden dadurch erschlossen, dass das Füllgut mindestens zeitweilig mit einem variablen Volumenstrom zugeführt wird.

Eine äußerst kompakte Konstruktion wird dadurch unterstützt, dass die Behälter auf einem rotierenden Prozessrad oder Rotor geformt, gefüllt und verschlossen werden.

Eine weitere Ausführungsvariante besteht darin, dass eine generierte Reckkraft gemessen wird. Lediglich geringe von der Reckstange aufzubringende Reckkräfte können dadurch gewährleistet werden, dass ein Volumenstrom des Füllgutes in Abhängigkeit von einer gemessenen Reckkraft gesteuert wird.

Unabhängig von den vorgenannten Merkmalen oder zusätzlich zu diesen Merkmalen ist das erfindungsgemäße Verfahren in Weiterbildung der Erfindung vorzugsweise so ausgebildet,
dass in der ersten Prozessphase vorher entgastes Füllgut zugeführt wird,
und/oder dass in der zweiten Prozessphase das Füllgut oder der Anteil an Füllgut mit der höheren Konzentration an Kohlendioxid zugeführt wird,
und/oder dass das Füllgut oder der Anteil bzw. die Komponente des Füllgutes mit der höheren CO₂-Konzentration vor dem Einleiten gekühlt wird und in der zweiten Prozessphase das Füllgut oder der Anteil des Füllgutes mit der höheren CO₂-Konzentration eine tiefere Temperatur als das Füllgut oder der Anteil des Füllgut der ersten Prozessphase aufweist,
und/oder dass der Kohlendioxidgehalt bzw. CO₂-Gehalt in einer zweiten Prozessphase 30Gew.-%, vorzugsweise 50 bis 100 Gew.-% über dem CO₂-Gehalt der ersten Phase liegt,
und/oder dass die Temperatur des Füllgutes oder des Anteils des Füllgutes der zweiten Prozessphase kleiner als 10°C liegt, insbesondere zwischen 4°C und 8°C liegt,
und/oder dass der Druck des Füllgutes oder des Anteils des Füllgutes, welches die höhere CO₂-Konzentration und/oder die tiefere Temperatur aufweist, mindestens zeitweise während des Ausformungsprozesses höher ist, als mindestens ein anderer oder der restliche Anteil des Füllgutes, und zwar insbesondere um mindestens 1 bar höher ist,
und/oder dass der Druck auf einer Teilleitungsstrecke höher ist als der Druck des Füllgutes oder des Anteils des Füllgutes, welcher die höhere CO₂-Konzentration und/oder die tiefere Temperatur aufweist, und zwar vorzugsweise mindestens zeitweise während des Formungsprozesses oder während der Form- und Füllphase um 2 bar bis 5 bar höher ist als mindestens ein anderer oder der restliche Anteil des Füllgutes,
und/oder dass auf dem Strömungsweg des innerhalb des Reckstabes fließenden Füllgutes oder des Anteils des Füllgutes, ein Drosselelement oder eine Querschnittsverengung vorgesehen ist, wobei das Drosselelement insbesondere kurz vor wenigstens einem an der Reckstange gebildeten Auslass angeordnet ist,
und/oder dass ein Teil des Füllgutes an der Reckstange vorbei und ein weiterer Teil durch die Reckstange hindurch zugeführt werden,
und/oder dass der Anteil des Füllgutes mit dem höheren CO₂-Gehalt gekühlt wird,
und/oder dass der Anteil des Füllgutes mit dem höheren CO₂-Gehalt durch die Reckstange hindurch zugeführt wird,
und/oder dass die Reckstange mindestens bereichsweise relativ zum Füllgut thermisch isoliert wird,
wobei die vorgenannten Merkmale jeweils einzeln oder in beliebiger Kombination vorgesehen sein können.

Die erfindungsgemäße Vorrichtung ist so ausgebildet, dass sie mit einer Heizstrecke zum Vorheizen der Vorformlinge und mit wenigstens einer eine Form aufweisenden Form- und Füllstation sowie mit wenigstens einer Vorratseinrichtung zur Bereitstellung des Füllgutes versehen ist, wobei vorzugsweise eine Karbonatisierungseinheit zum Einbringen oder Lösen von Kohlendioxid zumindest in einen Teilstrom des Füllgutes vorgesehen ist. Die erfindungsgemäße Vorrichtung ist dadurch gekennzeichnet, dass die wenigstens eine Form- und Füllstation mit wenigstens einer Einrichtung zur Zufuhr von Trockeneis, insbesondere in Form von Pellets, versehen ist.

Die erfindungsgemäße Vorrichtung kann in Weiterbildung der Erfindung vorzugsweise so ausgebildet sein,
dass eine Kühlungseinheit entlang einer Leitung oder eines Leitungsabschnittes für denjenigen Anteil des Füllgutes vorgesehen ist, in welchem stromabwärts, d.h. nach dem Kühlen und Durchströmen des Leitungsabschnitts Kohlendioxid gelöst wird oder welcher der Leitung von der Karbonatisierungseinheit zuströmt,
und/oder dass mindestens ein Leitungsabschnitt, in dem das Füllgut oder der Anteil des Füllgutes mit dem hohen CO₂-Gehalt geführt wird, isoliert ist, insbesondere mit einer Isolierung, die aus Teflon oder aus einem teflonhaltigem Material besteht,
und/oder dass mindestens ein Leitungsabschnitt, in dem das Füllgut oder der Anteil des Füllgutes mit dem hohen CO₂-Gehalt geführt wird, isolierend ausgekleidet ist, beispielsweise mit Teflon oder aus einem teflonhaltigem Material,
wobei die vorgenannten Merkmale jeweils einzeln oder in beliebiger Kombination vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Der Ausdruck "im Wesentlichen" oder "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
- Figur 1: eine schematische Darstellung eines Grundaufbaus einer Einrichtung oder Form- und Füllmaschine zur Durchführung der hydraulischen Behälterformung unter Verwendung eines Füllgutes,
- Figur 2: einen schematischen Längsschnitt durch einen Vorformling mit teilweise eingeführter Reckstange sowie einer Entlüftungseinrichtung,
- Figur 3: einen schematischen Längsschnitt durch einen geformten Behälter mit teilweise eingeführter Reck- und Fülleinrichtung,
- Figur 4: einen Längsschnitt durch eine Form- und Fülleinrichtung oder -station bei einer abgewandelten Ausführungsform,
- Figur 5: einen Längsschnitt durch eine Form- und Fülleinrichtung oder -station mit einer Abdichtung zur Verhinderung eines Nachtropfens,
- Figur 6: eine Ausführungsform mit steuerbarer Zuführung des Füllgutes und separater steuerbarer Entlüftung,
- Figur 7: eine schematische Darstellung einer kombinierten Form-, Füll- und Verschließeinrichtung oder -station und
- Figur 8: eine andere Ausführungsform der kombinierten Form-, Füll- und Verschließeinrichtung oder -station gemäß Figur 7,
- Figuren 9 - 11: jeweils in schematischer Schnittdarstellung eine weitere Ausführungsform der Reckstange einer Form- und Füllmaschine oder -station gemäß der Erfindung in unterschiedlichen Prozessphasen;
- Figur 12: in ähnlicher Darstellung wie Figuren 10 - 12 eine weitere modifizierte Ausführungsform der Reckstange der erfindungsgemäßen Form- und Füllmaschine oder -station.

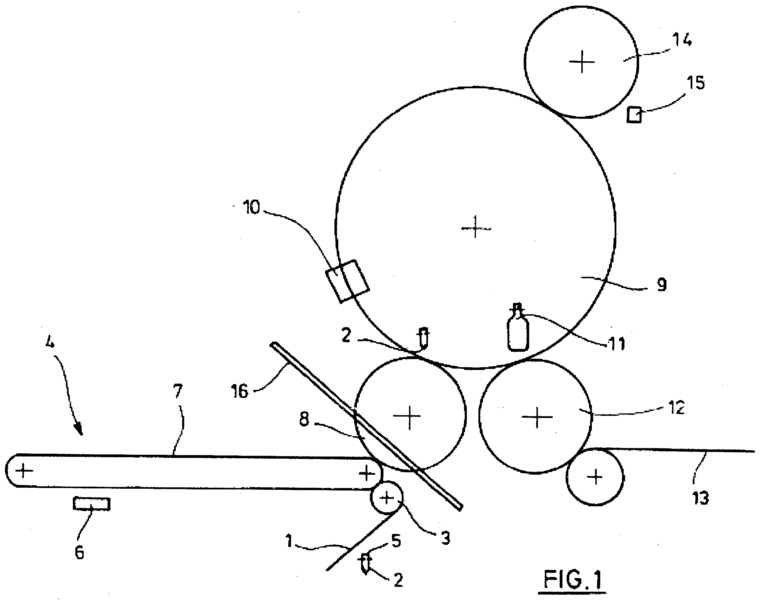

Der prinzipielle Aufbau einer kombinierten Form- und Füllvorrichtung oder -maschine ist in Figur 1 dargestellt. Von einer Zuführeinrichtung 1 werden schematisch dargestellte Vorformlinge 2, die auch als Preforms bezeichnet werden, unter Verwendung eines Übergaberades 3 von einer Heizeinrichtung 4 zugeführt. Im Bereich der Heizeinrichtung 4, in der die Vorformlinge 2 vorgeheizt bzw. thermisch konditioniert werden, können die Vorformlinge 2 anwendungsabhängig beispielsweise mit ihren Mündungsabschnitten 5 in lotrechter Richtung nach oben oder in lotrechter Richtung nach unten transportiert werden. Die Heizeinrichtung 4 ist beispielsweise mit Heizelementen 6 ausgestattet sein, die entlang einer Transporteinrichtung 7 angeordnet sind. Als Transporteinrichtung 7 kann beispielsweise eine umlaufende Kette verwendet werden. Als Heizelemente 6 eignen sich beispielsweise IR- oder NIR-Strahler sowie andere energieemittierende Strahler.

Nach einer ausreichenden Temperierung (auch thermische Konditionierung) werden die Vorformlinge 2 von einem Übergaberad 8 zu einem rotationsfähig angeordneten, d.h. um eine vertikale Maschinenachse umlaufend antreibbaren Rotor oder Prozessrad 9 bzw. an Form- und Füllstationen 10 übergeben, die an dem Rotor oder Prozessrad 9 vorgesehen sind. Das Prozessrad 9 ist mit einer Mehrzahl solcher Formstationen 19 ausgestattet, in deren Bereich sowohl eine Umformung der Vorformlinge 2 in die schematisch dargestellten Behälter 11 als auch eine Befüllung der Behälter 11 mit dem vorgesehenen Füllgut erfolgt. Das Formen jedes Behälters 11 erfolgt hierbei zeitgleich mit der Befüllung, wobei das Füllgut als Druckmedium beim Formen dient.

Nach dem Formen und Füllen werden die Behälter 11 von einem Entnahmerad 12 vom Prozessrad 9 wegtransportiert und einer Ausgabestrecke 13 zugeführt.

Gemäß der Ausführungsform in Figur 1 ist es vorgesehen, dem Prozessrad 9 über eine Eingabeeinrichtung 14 schematisch dargestellte Verschlusselemente 15 zuzuführen. Hierdurch ist es möglich, auf dem Prozessrad 9 auch bereits ein Verschließen der Behälter 11 durchzuführen und unter Verwendung der Entnahmeeinrichtung 12 fertig geformte, gefüllte und verschlossene Behälter 11 zu handhaben. Das Verschlusselement 15 kann beispielsweise als aufschraubbare Verschlusskappe, als Kronkorken oder als Siegelfolie ausgebildet sein.

Als Material für die Vorformlinge 1 können vorzugsweise unterschiedliche thermoplastische Materialien verwendet werden. Beispielhaft seien Polyethylenterephthalat (PET), Polyäthylen (PE), Polyäthylennaphthalat (PEN) oder Polypropylen (PP) genannt. Die Dimensionierung sowie das Gewicht der Vorformlinge 2 können an die Größe, das Gewicht und/oder an die Gestaltung der herzustellenden Behälter 11 angepasst werden.

Im Bereich der Heizeinrichtung 4 sind typischerweise eine Vielzahl von elektrischen und elektronischen Bauteilen angeordnet. Darüber hinaus sind die Heizelemente 6 mit feuchtigkeitsempfindlichen Reflektoren versehen. Da im Bereich des Prozessrades 9 unter Verwendung des flüssigen Füllgutes eine Befüllung und Formung der Behälter erfolgt, ist dafür zu sorgen, dass ein unbeabsichtigter Eintrag von Feuchtigkeit in den Bereich der Heizeinrichtung 4 vermieden wird. Dies kann beispielsweise durch eine Abschottung 16 erfolgen, die zumindest einen Spritzschutz bietet. Darüber hinaus ist es auch möglich, im Bereich des Übergaberades 8 verwendete Transportelemente für die Vorformlinge 2 geeignet zu temperieren oder mit Stößen von Druckgas derart zu beaufschlagen, dass anhaftende Feuchtigkeit nicht in den Bereich der Heizeinrichtung 4 gelangen kann.

Eine Handhabung der Vorformlinge 2 und/oder der Behälter 11 erfolgt vorzugsweise unter Verwendung von Zangen und/oder den Mündungsabschnitt 5 wenigstens bereichsweise von innen oder von außen beaufschlagenden Klemm- oder Steckelementen.

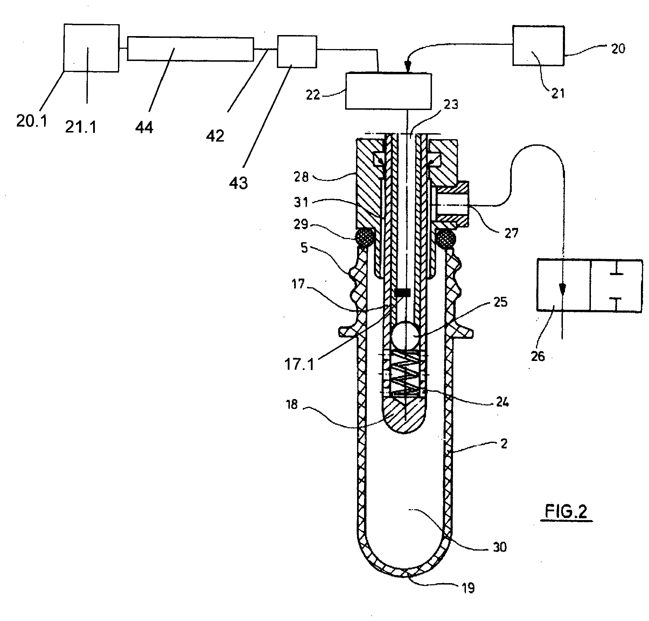

Figur 2 zeigt einen Längsschnitt durch einen Vorformling 2, in den ein Reckstab oder eine Reckstange 17 eingeführt ist. Die Reckstange 17 dient der mindestens zeitweisen Führung des Vorformlings 1 während seiner Umformung zum Behälter 11. Typischerweise erfolgt ein Kontakt zwischen einer Kuppe 18 der Reckstange 17 und einem Boden 19 des Vorformlings 2. Bei einem weiteren Einfahren der Reckstange 17 in den Vorformling 2 hinein wird eine Längsreckung des Vorformlings 2 verursacht. Nach einem Abschluss des Reckvorganges oder zumindest zeitweilig auch bereits während der Durchführung des Reckvorganges wird einer Vorratseinrichtung 20 entnommenes Füllgut 21 in den Vorformling 2 eingeleitet.

Eine Dosierung des Füllgutes 21 erfolgt unter Verwendung eines Mehrwegedosierventils 22. Beim dargestellten Ausführungsbeispiel ist die Reckstange 17 mindestens bereichsweise hohl bzw. mit einem Kanal ausgebildet und das Füllgut 21 wird einem Innenraum 23 der Reckstange 17 zugeführt. Im Bereich einer Wandung der Reckstange 17 sind Ausströmöffnungen 24 angeordnet, die von einem Rückschlagventil 25 gegenüber dem Mehrwegedosierventil 22 absperrbar sind. Hierdurch kann ein unbeabsichtigtes Heraustropfen von Füllgut 21 aus der Reckstange 17 vermieden bzw. minimiert werden.

Eine Entlüftung des Vorformlings 2 kann unter Verwendung eines Entlüftungventils 26 erfolgen. Das Entlüftungsventi! 26 ist mit einer Ausströmöffnung 27 verbunden, die im Bereich eines den Vorformling 1 beaufschlagenden Anschlusselementes 28 angeordnet ist. Durch das Anschlusselement 28 hindurch ist die Reckstange 17 positionierbar. Der Vorformling 2 wird gegenüber dem Anschlusselement 28 von einer Dichtung 29 abgedichtet, die beispielsweise als ein O-Ring ausgebildet sein kann. Ein Innenraum 30 des Vorformlings 2 kann über einen Ringspalt 31 mit der Ausströmöffnung 27 verbunden sein. Der Ringspalt 31 umschließt hierbei bereichsweise die Reckstange 17.

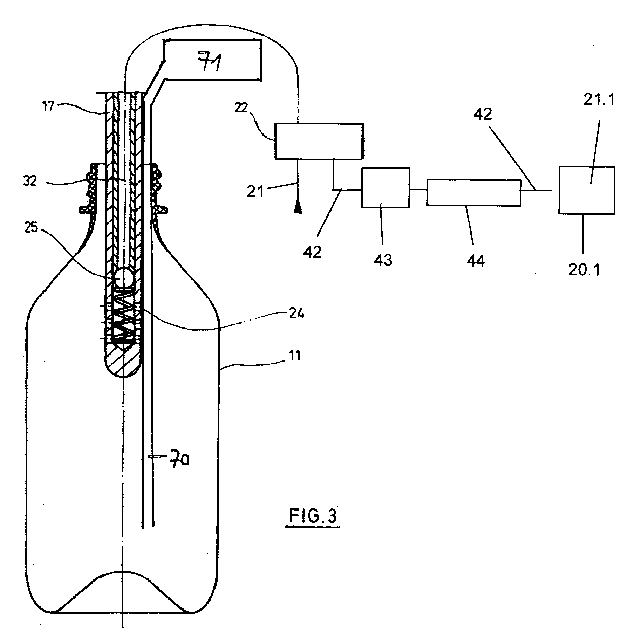

Figur 3 zeigt schematisch eine ähnliche Einrichtung wie in der Darstellung gemäß Figur 2 unter Verwendung einer hohlen Reckstange 17 mit einem eingebauten Rückschlagventil 25. Dargestellt ist allerdings ein bereits fertig geformter Behälter 11. Zu erkennen ist sowohl in Figur 2 als auch in Figur 3, dass vorzugsweise eine Mehrzahl von Ausströmöffnungen 24 im Bereich der Reckstange 17 angeordnet wird. Beim dargestellten Ausführungsbeispiel sind derartige Ausströmöffnungen 24 auf unterschiedlichen Höhenniveaus entlang einer Längsachse 32 der Reckstange 17 positioniert. Ebenfalls zeigt das dargestellte Ausführungsbeispiel eine Ausrichtung der Ausströmöffnungen 24 mit einer im Wesentlichen horizontalen Ausströmrichtung. Sowohl die Anordnung der Ausströmöffnungen 24 im Bereich der Reckstange 17 als auch die Ausrichtung der Ausströmöffnungen (24) ist aber variierbar. Angestrebt wird typischerweise ein möglichst ruhiges und spritzarmes Ausströmverhalten.

Weiter ist schematisch eine erfindungsgemäße Vorrichtung zur Zufuhr von Trockeneis 70 dargestellt, mit der in der zweiten Prozessphase Trockeneis, im vorliegenden Beispiel in Form von Pellets aus einem isolierten Vorratsbehälter 71, in den sich formenden oder bereits geformten Behälter eingeschossen werden kann. Die Schaumbildung des Füllmediums nach dem Entlasten des Behälters kann dadurch solange verzögert werden, bis der Behältler verschlossen ist. Gleichzeitig ist es möglich, ein mit einem hohen CO₂-Gehalt versehenes Füllmedium in den Behältern abzufüllen.

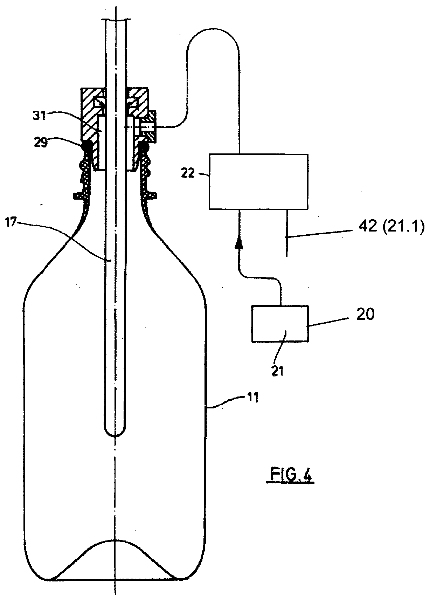

Gemäß der Ausführungsform in Figur 4 wird eine massive Reckstange 17 verwendet. Eine Zuführung des Füllgutes 21 erfolgt entlang mindestens eines Strömungskanals an der Reckstange 17 vorbei. Vorzugsweise wird hierzu der Ringspalt 31 verwendet. Auch bei dieser Ausführungsform ist es möglich, ein gezieltes Entlüften durchzuführen.

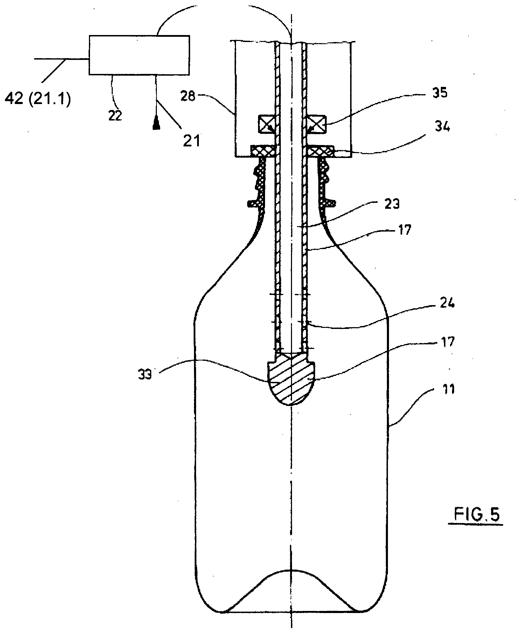

Figur 5 zeigt eine Ausführungsform, bei der die Reckstange 17 eine zur Verhinderung eines Nachtropfens optimierte Ausführungsform besitzt. Im Bereich der Kuppe 17 ist hierzu ein Dichtelement 33 angeordnet. Das Dichtelement 33 kann beispielsweise durch eine Durchmesservergrößerung der Reckstange 17 bereitgestellt werden. Ebenfalls ist eine geeignete Materialauswahl denkbar. Beim Zurückziehen der Reckstange 17 aus dem Behälter 11 heraus gelangt das Dichtelement 33 in Kontakt mit einem Gegenelement 33, das im Bereich des Anschlusselementes 28 angeordnet ist. Das Gegenelement 34 ist vorzugsweise als eine Dichtung ausgeführt. Die Ausströmöffnungen 24 der Reckstange 17 sind nach einer entsprechenden Positionierung der Reckstange 17 abgedichtet vom Behälter 11 getrennt angeordnet, so dass ein Nachtropfen aus dem Innenraum 23 der Reckstange 17 heraus sicher vermieden werden kann. Im Bereich des Anschlusselementes 28 ist typischerweise mindestens ein Lager 35 zur Führung der Reckstange 17 angeordnet.

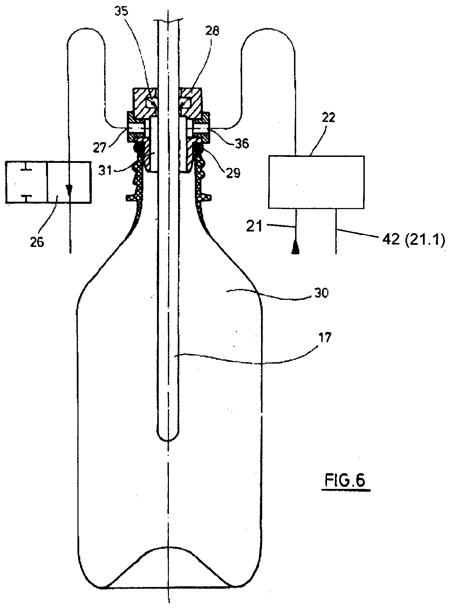

Figur 6 zeigt eine Ausführungsform, bei der wiederum eine massive Reckstange 17 verwendet wird. Durch an der Reckstange 17 vorbeilaufende Strömungskanäle, insbesondere durch den Ringspalt 31 hindurch, ist sowohl das Mehrwegedosierventil 22 für das Füllgut 21 als auch das Entlüftungsventil 26 mit dem Innenraum 30 des Vorformlings 2 bzw. des Behälters 11 verbunden. Beim dargestellten Ausführungsbeispiel ist die Ausströmöffnung 27 in einer radialen Richtung des Anschlusselementes 28 gegenüberliegend zu einer Zuführöffnung 36 angeordnet, die mit dem Mehrwegedosierventil 22 verbunden ist.

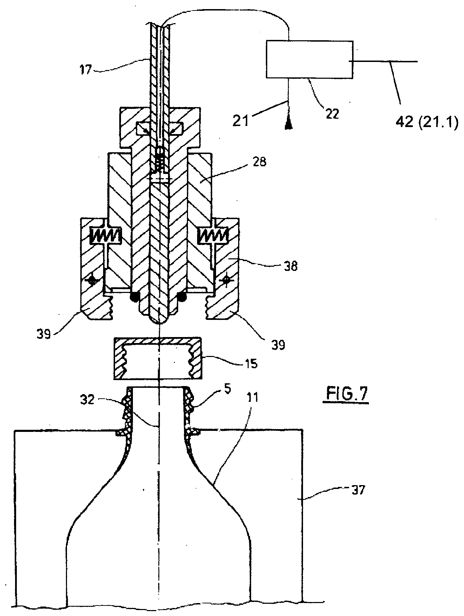

Figur 7 zeigt eine Ausführungsform, bei der im Bereich des Prozessrades 9 gemäß Figur 1 auch ein Verschließen der Behälter 11 erfolgt. Der Behälter 11 ist hierbei noch im Bereich einer Form 37 angeordnet, die einen Teil der Formstation 10 gemäß Figur 1 ausbildet. Eine Verschließeinrichtung 38 ist bei dieser Ausführungsform bezüglich der Längsachse 32 koaxial zum Anschlusselement 28 angeordnet. Die Verschließeinrichtung 38 besitzt beispielsweise verschwenkbar angeordnete Greifer 39, die zur Beaufschlagung des Verschlusselementes 15 vorgesehen sind. Insbesondere ist daran gedacht, die Verschließeinrichtung 38 drehbeweglich relativ zum Anschlusselement 28 anzuordnen. Hierdurch kann das Verschlusselement 15 mit einem Innengewinde auf ein Außengewindes des Mündungsabschnittes 5 aufgeschraubt werden.

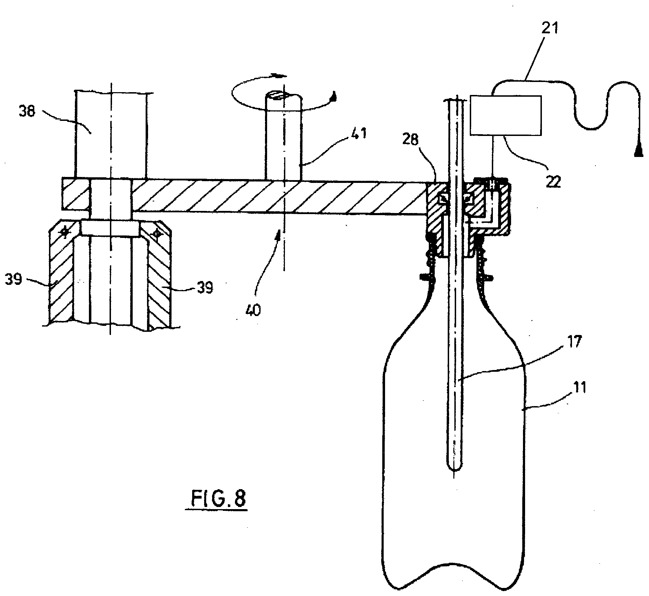

Figur 8 zeigt eine alternative Ausführungsform zur Konstruktion gemäß Figur 7. Die Verschließeinrichtung 38 und das Anschlusselement 28 sind hier nicht koaxial relativ zueinander angeordnet, sondern werden von einem Werkzeugträger 40 abwechselnd in einer Arbeitsanordnung bzw. einer Ruheanordnung positioniert. Der Werkzeugträger 40 kann beispielsweise revolverartig ausgebildet und mit einer Drehachse 41 versehen sein.

Nachfolgend werden einige Prozesstypische Parameter beispielhaft näher erläutert. Das Füllgut 21 wird dem Anschlusselement 28 vorzugsweise mit einer Temperatur des umgebenden Raumes, beispielsweise im Bereich von 20°C bis 30°C, zugeführt. Das Füllgut 21 kühlt hierdurch das Material des Behälters 11 und unterstützt eine schnelle Formstabilität des geformten Behälters 11. Hierdurch wird eine sehr kurze Zykluszeit unterstützt. Ebenfalls ist es aber möglich, das Füllgut 21 stärker gekühlt oder erwärmt zuzuführen.

Während der Formung des Behälters 11 kann das Füllgut 21 zumindest zeitweilig mit einem konstanten Volumenstrom in den Vorformling 2 bzw. den Behälter 11 eingeleitet werden. Es ist aber auch möglich, für den Volumenstrom ein geeignetes zeitliches Profil derart vorzugeben, dass zu unterschiedlichen Zeitpunkten unterschiedlich große Volumenströme generiert werden.

Vor einer Einleitung des Füllgutes 21 ist es möglich, innerhalb des Vorformlings 1 befindliche Luft abzusaugen und/oder durch ein Inertgas zu ersetzen. Dies empfiehlt sich insbesondere bei oxidationsempfindlichen Füllmedien 21.

Als Füllgut 21 können entweder reine Flüssigkeiten oder mit Zusätzen versehene Flüssigkeiten verwendet werden. Insbesondere ist an eine Zuführung von karbonisierten Füllmedien gedacht. Da das Füllgut 21 dem Vorformling 1 bzw. dem Behälter 2 unter Druck zugeführt wird, beispielsweise mit einem Druck von 10 bar, erweist es sich als zweckmäßig, sämtliche Strömungswege für das Füllgut 21 derart zu gestalten, dass lokale Dekompressionen durch die Strömungsvorgänge vermieden werden. Eine lokale oder zeitweilige Dekompression könnte ansonsten zu einem Ausgasen von Kohlendioxid führen.

Alternativ zu der in Figur 1 dargestellten Beheizung von vorzugsweise spritzgegossenen Vorformlingen 2 ist es auch möglich, die Vorformlinge 2 unmittelbar vor ihrer Umformung in die Behälter 11 herzustellen. Dies kann beispielsweise durch einen Spritzgussvorgang wie bei einem sogenannten einstufigen Spritz-Blas-Verfahren erfolgen, ebenfalls ist eine Kompressions-Formung möglich. Eine derartige Formung der Vorformlinge 2 vermeidet die Verwendung von elektrischen und elektronischen Bauteilen im Bereich einer Heizeinrichtung oder reduziert zumindest wesentlich den Umfang einer Verwendung derartiger Teile, da diese dann nur noch für eine eventuell erforderliche Temperaturprofilierung benötigt werden.

Als Materialien für die Bauteile des Prozessrades 9 werden vorzugsweise korrosionsfeste Stoffe verwendet. Gedacht ist insbesondere an die Verwendung von nichtrostenden Stählen sowie Kunststoffen. Insbesondere ist daran gedacht, die Formen 37 ganz oder teilweise aus einem geeigneten Kunststoff auszubilden.

Zur Minimierung der erforderlichen Reckkräfte ist daran gedacht, den Reckvorgang durch eine Zufuhr des Füllgutes 21 zu unterstützen. Bei einer derartigen Unterstützung ist allerdings dafür zu sorgen, dass die Führung des Vorformlings 2 durch die Reckstange 17 sichergestellt ist. Dies kann beispielsweise dadurch erfolgen, dass die einwirkende Reckkraft gemessen wird und eine Steuerung des Volumenstromes des Füllgutes 21 derart erfolgt, dass immer eine Mindestreckkraft aufrecht erhalten bleibt. Die Größe der Reckkraft lässt sich insbesondere sehr einfach bei elektrisch angetriebenen Recksystemen durch die Messung des Antriebsstromes oder bei pneumatischen Recksystemen durch eine Druckmessung ermitteln.

Bei der Abfüllung von Behältern 11 mit dem Füllgut 21 ist es häufig erwünscht, nach einem Verschließen des Behälters 11 einen gasgefüllten Kopfraum bereitzustellen. Dieser freie Kopfraum kann durch die Volumenverminderung generiert werden, die aus dem Zurückziehen der Reckstange 17 resultiert.

Die oben bereits erläuterte Materialauswahl erfolgt insbesondere auch unter Berücksichtigung von gegebenen Hygieneanforderungen. Es wird hierbei eine Entkeimbarkeit bzw. Sterilisierbarkeit gewährleistet. Ebenfalls erfolgt ein konstruktiver Aufbau derart, dass die Anforderungen an eine gute Reinigbarkeit erfüllt sind.

Eines oder mehrere der Übergaberäder können mit Servoantrieben ausgestattet sein.

Hierdurch wird es insbesondere unterstützt, eine vollständige Trennung der Heizeinrichtung 4 vom Prozessrad 9 während der Durchführung von Reinigungsvorgängen zu realisieren. Ebenfalls ist daran gedacht, im Bereich mindestens eines der Übergaberäder zurückziehbare Handhabungselemente anzuordnen. Ein weiterer Feuchtigkeitsschutz kann durch die Verwendung eines Trockenlufttunnels erfolgen.

Nachfolgend wird beispielhaft ein konkreter Prozessablauf beschrieben. Vor oder nach dem Einsetzen des Vorformlings 2 in die Form 37 erfolgt zunächst ein Gasaustausch im Innenraum des Vorformlings, um insbesondere Sauerstoff zu verdrängen oder den Anteil von Sauerstoff zu vermindern. Ein Vorgang des Spülens und/oder Evakuierens dauert typischerweise höchstens 0,1 Sekunde. Das Recken des Vorformlings 2 unter Verwendung der Reckstange 17 dauert typischerweise etwa 0,2 Sekunden. Ebenfalls ist für das Füllen und die hieraus resultierende Umformung des Vorformlings 2 in den Behälter 11 ein Zeitraum von etwa 0,2 Sekunden vorgesehen. Für das anschließende Schaffen eines Kopfraumes wird typischerweise maximal ein Zeitraum von 0,2 Sekunden benötigt. Der Vorgang des Beruhigens und Entlastens des abgefüllten Behälters erfolgt bei stillen Getränken äußerst schnell, bei kohlensäurehaltigen Getränken kann dieser Vorgang einen Zeitraum bis zu 5 Sekunden in Anspruch nehmen.

Eine Behandlung des Kopfraumes kann anschließend beispielsweise unter Verwendung einer Hochdruckaufschäumung oder einer Zudosierung von Stickstoff erfolgen. Das anschließende Zuführen einer Verschlusskappe kann bei karbonisierten Getränken einen Zeitraum bis zu 1,5 Sekunden in Anspruch nehmen. Ebenfalls nimmt der Vorgang des Verschließens bzw. Aufschraubens beispielsweise einen Zeitraum von 1,5 Sekunden in Anspruch.

Nach dem fertigen Verschließen des Behälters 11 öffnet die Form 37 und der abgefüllte Behälter 11 wird entnommen und abtransportiert.

Während der Einleitung des Füllgutes in den umzuformenden Vorformling 2 bzw. den noch in der Formung befindlichen Behälter 11 ergibt sich in der Regel ein typischer Druckverlauf im Füllsystem bzw. im Vorformling 2 bzw. den noch in der Formung befindlichen Behälter 11. Aufgrund der Aufweitung des Behälters 11 liegt zunächst ein vergleichsweise geringer Druck vor, der zum Ende des Formungsvorgangs ansteigt. Der entsprechende Druckanstieg bzw. die Höhe des Druckanstieges im Füllsystem, insbesondere in der Füllleitung, kann als Steuergröße für einen folgenden Prozessschritt verwendet werden und gegebenenfalls den Zeitpunkt der Einleitung dieses nächsten Prozessschrittes bestimmen. Alternativ oder ergänzend ist auch daran gedacht, als Steuergrößen die Charakteristik des Druckverlaufes und/oder des Volumenstromes des Füllgutes zu verwenden.

Hinsichtlich der Temperatur des Füllgutes ist insbesondere daran gedacht, das Füllgut mit einer Umgebungstemperatur zuzuführen. In Abhängigkeit von den jeweiligen Anwendungsrandbedingungen ist aber gegenüber einer Befüllung mit Umgebungstemperatur auch eine Temperaturerhöhung oder eine Temperaturerniedrigung denkbar.

Gemäß einer weiteren Variante ist daran gedacht, den Füllvorgang zweistufig durchzuführen, wobei während der ersten Prozessstufe das Füllgut mit einer Temperatur zugeführt wird, die größer ist als die Temperatur während des zweiten Prozessschrittes. Der erste Prozessschritt kann beispielsweise durchgeführt werden, wenn über die Reckstange 11 die Längsreckung des Vorformlings 2 durchgeführt wird. Der zweite Prozessschritt schließt sich dann an die Durchführung des Reckvorganges an und entspricht der Queraufweitung des Behälters 11.

Bei der vorstehend bereits kurz erwähnten Beruhigung im Kopfraum nach der Druckentlastung ist auch daran gedacht, gegebenenfalls eine Absaugung von sich bildenden Gasen und/oder Schaum durchzuführen.

Hinsichtlich des Verschließens der fertig geformten und befüllten Behälter 11 sind ebenfalls unterschiedliche Varianten realisierbar. Bei einer Variante ist es möglich, einen Teil der Behandlungs- oder Form- und Füllstationen 10 auf dem Rotor oder Prozessrad 9 mit einem Revolverkopf zu versehen. Der Revolverkopf umfasst einerseits einen Blas- bzw. Form- und Füllkopf und andererseits einen Verschließkopf. Dies entspricht der schematischen Darstellung in Figur 8. Ebenfalls ist es aber denkbar, eine integrierte Konstruktion zu verwenden, bei der der jeweilige Kopf sowohl den Blas-, den Füll- und den Verschließvorgang durchführt.

Gemäß einer weiteren Variante sind zwar der Form- und Füllkopf und der Verschließkopf als separate Bauteile ausgebildet, jedoch verschwenkbar an jeder Form- und Füllstation 10 angeordnet. Gemäß einer dritten Variante ist lediglich der Form- und Füllkopf auf dem Rotor oder Prozessrad 9 angeordnet und es erfolgt eine Übergabe des noch offenen Behälters an eine separate Verschließvorrichtung, beispielsweise an ein Transportrad, das mit einem Verschließkopf ausgestattet ist.

Die Applikation der Verschlusselemente 15, beispielsweise der Verschlusskappen, kann beispielsweise unmittelbar nach der Öffnung der jeweiligen Form 37 und Erfassung des Behälters 11 durch ein Halte- und Greifelement erfolgen. Eine vorteilhafte Variante besteht darin, die Form 37 geschlossen zu halten und damit den Behälter 11 lagerichtig zu fixieren, wobei nur die Mündung für eine Verschließelement freigegeben wird. Diese Freigabe erfolgt in dem entweder die Form 37 für eine Winkelstrecke auf eine radial unterschiedliche Position verfahren wird oder der Form- und Füllkopf verschwenkt und oder verfahren wird, so dass die Behältermündung für eine Verschließelement frei wird.

Hierdurch würde somit eine Aufgabe der Verschlusskappen auf dem Rotor oder Prozessrad 9 erfolgen. Insbesondere ist daran gedacht, vor einer Aufgabe der Verschlusselemente 15 den Mündungsraum des gefüllten Behälters 11 mit einem Inertgas zu beaufschlagen.

Vorstehend wurde der einfacheren Beschreibung wegen davon ausgegangen, dass nur eine Vorratseinrichtung 20 für das Füllgut 21 vorgesehen ist. Tatsächlich weist die Form- und Füllvorrichtung oder -maschine aber eine weitere Vorratseinrichtung 20.1 für einen weiteren Anteil oder eine weitere Komponente des Füllgutes auf, der bzw. die einen höheren CO₂-Gehalt aufweist als das Füllgut 21 und nachfolgend mit 21.1 bezeichnet ist.

Als besonders vorteilhaft hat sich gezeigt, wenn bei den vorgenannten Verfahren eine Unterschichtung erreicht wird, und zwar insbesondere in Bezug auf das Einbringen des Anteils oder der Komponente des Füllgutes 21.1 mit CO₂-Gehalt oder mit dem höheren CO₂-Gehalt. Es hat sich nämlich als problematisch herausgestellt, im Falle einer Voll- oder Teilkarbonatisierung des Füllgutes die rapide Druckentlastung nach dem Ausformen und Füllen der Behälter 11 von dem hohen Form- und Fülldruck bis zum Verschließen des jeweiligen Behälters beispielsweise bei Umgebungsdruck ohne Produktverlust zu gestalten. Eine hierbei auftretende massive Schaumbildung mit Produktverlust hindert bisher den Einsatz dieser hydraulischen Ausformtechnik für CO₂-haltige Produkte.

Nach einer der Erfindung zugrunde liegenden Erkenntnis, ist es u.a. zur Vermeidung derartiger Produktverluste besonders vorteilhaft, wenn das Füllgut 21 bzw. 21.1 oder die Anteile des Füllgutes 21 bzw. 21.1 an zu mindestens zwei Zeitpunkten oder in zu mindest zwei Prozessphasen mit unterschiedlichen CO₂-Gehalten und/oder mit unterschiedlichen Temperaturen zugeführt wird. Hierbei ist es zweckmäßig, in einer zweiten oder nachfolgenden Prozessphase das Füllgut oder die Füllgutkomponente 21.1 mit der höheren Konzentration an Kohlendioxid zuzuführen. Dies hat den Vorteil, dass zwar das Füllgut 21 und 21.1 im entstehenden Behälter 11 zusammengeführt das hydraulische Druckmedium zum Formen des Behälters 11 bilden, sich aber das in den sich bildenden Behälter 11 bereits eingebrachte Füllgut 21 beruhig hat oder im Wesentlichen beruhigt hat und beim Einbringen des Füllgutes 21.1 oder des Anteils an Füllgut 21.1 mit der höheren CO₂-Konzentration zuerst weitere Lösungsprozess im Flüssigkeitsvolumen ablaufen. Die zweite oder nachfolgende Prozessphase ist dabei beispielsweise eine die Form- und Füllphase abschließende Prozessphase. Das Einleiten des Füllgutes 21.1 oder des Anteils an Füllgut 21.1 mit der höheren CO₂-Konzentration in das bereits vorhandene Flüssigkeitsvolumen erfolgt bevorzugt unterschichtig, d.h. z.B. im Bereich des Bodens des sich bildenden Behälters 11. Das Einbringen der Füllgutkomponenten bzw. des Füllgutes 21 und 21.1 erfolgt gesteuert durch das Mehrwegedosierventil 22.

Eine Variante besteht darin, das Füllgut 21.1 oder den Anteil an Füllgut 21.1 mit der höheren Konzentration an Kohlendioxid vor dem Einleiten zu kühlen, und dann in der vorgenannten zweiten Prozessphase dieses Füllgut 21.1 oder den entsprechenden Anteil mit der höheren Konzentration an Kohlendioxid mit einer tieferen Temperatur als das Füllgut 21 oder der Anteil an Füllgut 21 der ersten Prozessphase in den sich bildenden Behälter 11 einzuleiten. Auch allein hierdurch stellt sich eine Unterschicht mit CO₂-reichem Füllgut ein, wodurch eine Schaumbildung, auch eine Schaumbildung beim Entlasten soweit zumindest verringert wird, dass nachteilige Produktverluste nicht auftreten.

Hierbei sollte nach Möglichkeit der Kohlendioxidgehalt in der zweiten Prozessphase 30 Gew.-% über dem Kohlendioxidgehalt in der ersten Prozessphase liegen, insbesondere 50 Gew.-% bis 100 Gew.-% über dem Kohlendioxidgehalt in der ersten Phase. Idealerweise werden in der ersten oder vorausgehenden Prozessphase eine stille, d.h. CO₂-freie Füllgutkomponente, d.h. das Füllgut (21) und in der zweiten Prozessphase eine CO₂-reiche Füllgutkomponente, d.h. das Füllgut 21.1 in den sich bildenden Behälter 11 eingeleitet.

Eine Variante besteht darin, dass die Temperatur des Füllgutes 21.1 oder des Anteils des Füllgutes 21 der zweiten Prozessphase gekühlt ist, beziehungsweise mindestens 10°C unter der Temperatur der ersten oder einer vorausgegangenen Prozessphase liegt, insbesondere weniger als 10°C beträgt und idealer Weise zwischen 4°C und 8°C liegt.

Es hat sich als vorteilhaft erwiesen, wenn der Druck des Füllgutes 21.1 oder des Anteils des Füllgutes 21.1, welches bzw. welcher die höhere Kohlendioxidkonzentration und/oder die tiefere Temperatur aufweist, mindestens während des Ausformungsprozesses bzw. während der Form- und Füllphase zeitweise höher ist als der Druck mindestens eines anderen Anteils oder des restlichen Anteils des Füllgutes 21, und zwar bevorzugt um mindestens 1 bar.

Weiterhin sollte der Druck auf einer Leitungsstrecke 42 oder einem Teil der Leitungsstrecke, über die das Füllgut 21.1 oder der Anteil des Füllgutes 21.1 mit der höheren Kohlendioxidkonzentration und/oder mit der tieferen Temperatur zugeführt wird, höher als der Druck des restlichen Füllgutes 21 oder des restlichen Anteils des Füllgutes 21 sein, und zwar während des Ausformungsprozesses zumindest zeitweise um 2 bar bis 5 bar höher.

Eine Ausführung sieht vor, dass auf dem Strömungsweg des innerhalb des Reckstabes 17 fließenden Füllgutes 21 und 21.1 eine Drosselelement oder Querschnittsverengung vorgesehen ist, wobei das Drosselelement in Strömungsrichtung des Füllgutes 21 und 21.1 beispielsweise kurz vor mindestens einem Auslass 24 der des Reckstange 17 angeordnet ist. Somit wird der vorteilhafte hohe Druck bis kurz vor der ersten Entspannung beibehalten. Dies kann noch gesteigert werden, wenn ein Teil des Füllgutes 11 an der Reckstange 17 vorbei und ein Teil des Füllgutes 11 durch die Reckstange hindurch zugeführt wird. Dabei sollte zweckmäßiger Weise das stärker kohlendioxidhaltige Füllgut 21.1 durch die Reckstange 17 hindurch zugeführt werden. Vorteilhaft ist auch, wenn die Reckstange 17 mindestens bereichsweise relativ zum Füllgut 21 und 21.1 thermisch isoliert wird.

Die Form- und Füllvorrichtung bzw. -maschine umfasst somit zur Herstellung von gefüllten Behältern 11 aus einem thermoplastischen Material u.a. die mindestens eine entlang eines Transportweges eines Vorformlings 2 angeordnete Heizstrecke oder Heizvorrichtung 4 und wenigstens eine mit einer Form versehene Form- und Füllstation 10.

Weiterhin umfasst die Form- und Füllvorrichtung bzw. -maschine u.a. eine Zuführeinrichtung 1 für das in den Behälter 11 abzufüllendes Füllgut 21 und 21.1 sowie eine Karbonatisierungseinheit 43, die beispielsweise in der Leitungsstrecke 42 vorgesehen ist und mit der mindestens in dem Teilstrom des Füllgutes 21.1 Kohlendioxid gelöst werden kann, wobei die Form- und Füllstation 10 eine den Vorformling 2 während seiner Umformung in den Behälter 11 mindestens zeitweilig beaufschlagende Führungseinrichtung in Form einer Reckstange 17 aufweist und durch den Kanal oder Innenraum 23 der Reckstange 17 mindestens ein Teil des Füllgutes 21 leitbar ist. Am unteren Ende der Reckstange 17 ist wenigstens eine Auslassöffnung 24 des Kanals oder Innenraumes 23 vorgesehen sind.

Vorteilhafterweise ist eine Kühlungseinheit 44 zumindest entlang der Leitungsstrecke 42 für das Füllgut 21.1 vorgesehen, in welchem stromabwärts Kohlendioxid gelöst wird oder welches von der Karbonatisierungseinheit 43 zuströmt.

Hierbei sollte mindestens der Leitungsabschnitt 42, in dem das kohlendioxidreiche Füllgut 21.1 oder ein Anteil hiervon geführt wird, zumindest auf einer Teillänge thermisch isoliert, beispielsweise mit einer Isolierung aus Teflon oder aus einem teflonhaltigem Material, und/oder thermisch isoliert ausgekleidet sein, beispielsweise mit Teflon oder einem teflonhaltigem Material.

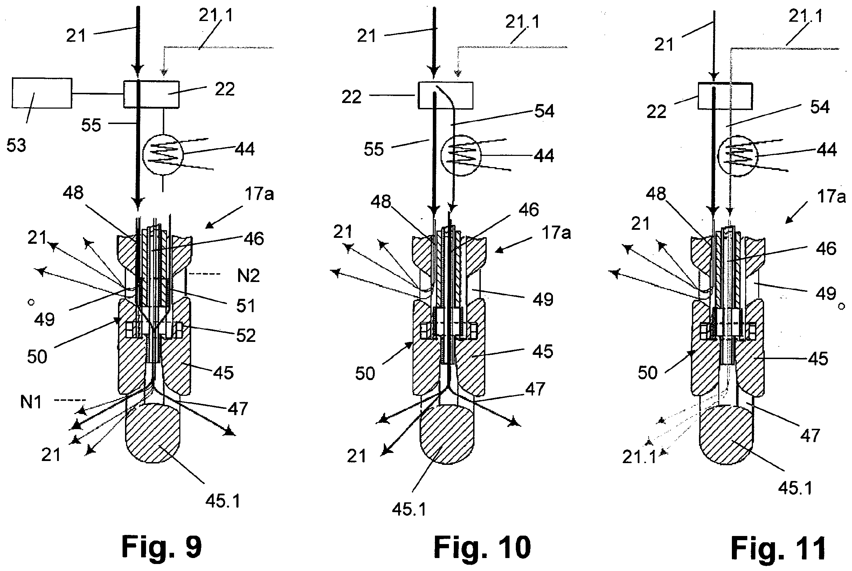

Die Figuren 9-11 zeigen in einer Teildarstellung und im Schnitt eine Reckstange 17a, die von ihrer grundsätzlichen Funktion her der Reckstange 17 entspricht, d.h. beim Formen und Füllen des jeweiligen Behälters 11 zur Führung und zur Steuerung insbesondere der axialen Streckung des jeweiligen Vorformlings 2 bzw. des sich formenden Behälters 11 dient. Die Reckstange 17a besteht im Wesentlichen aus einem stabförmigen Reckstangenkörper 45 mit abgerundeten freien Reckstangenende 45.1. In dem Reckstangenkörper 45 sind mehrere Kanäle ausgebildet, und zwar ein innerer, achsgleich mit der Längsachse der Reckstange 17a angeordneter Kanal 46, der in der Nähe des Endes 45.1 an mehreren um die Achse der Reckstange 17a verteilten Auslassöffnungen 47 auf dem unteren Niveau N1 mündet, sowie eine den inneren Kanal 46 umschließender und von diesem inneren Kanal getrennter äußerer ringförmiger Kanal 48, der an mehreren um die Achse der Reckstange 17a verteilten oberen Auslassöffnungen 49 an der Umfangs- bzw. Mantelfläche der Reckstange 17a auf dem oberen Niveau N2 mündet. Im Inneren der Reckstange 17a ist weiterhin ein in der Figur 9 allgemein mit 50 bezeichnetes Steuerventil vorgesehen, mit welchem gesteuert eine Verbindung zwischen dem inneren Kanal 46 und dem äußeren Kanal 48 hergestellt bzw. unterbrochen werden kann. Das Steuerventil 50 ist bei der dargestellten Ausführungsform im Wesentlichen von einem axial bewegbaren Verschlussring 51 gebildet, der beispielsweise durch eine nicht näher dargestellte Feder in seine in der Figur 9 angehobene und die Verbindung zwischen den Kanälen 46 und 48 freigebende Stellung vorgespannt ist. Durch eine Betätigungseinrichtung, beispielsweise durch eine in der Reckstange 17a untergebrachte Magnetspule 52 ist der Verschlussring 51 gegen die Wirkung der Feder in seine untere, die Verbindung zwischen den Kanälen 46 und 48 unterbrechende Stellung bewegbar.

Dargestellt ist in den Figuren 9-11 weiterhin das von einer elektronischen Steuereinheit 53 gesteuerte Mehrwegedosierventil 22, welches wiederum als Mehrwegeventil ausgeführt ist, welches mit einem ersten Anschluss oder Eingang mit der in der Figur 9 nicht dargestellten Vorratseinrichtung 20 für das Füllgut 21 und mit einem zweiten Anschluss mit der in der Figur 9 ebenfalls nicht dargestellten Vorratseinrichtung 20.1 für das Füllgut 21.1 in Verbindung steht. Die Ausgänge des Mehrwegedosierventils 22 sind über eine Flüssigkeitsverbindung 54 mit dem inneren Kanal 46 bzw. über eine Flüssigkeitsverbindung 55 mit dem äußeren ringförmigen Kanal 48 verbunden. In der Flüssigkeitsverbindung 54 ist die Kühleinheit 44 angeordnet. Über die Steuereinheit 53 wird auch das Steuerventil 50 bzw. dessen Magnetspule 52 gesteuert, wobei das Steuerventil 50 in der dargestellten Variante als elektromagnetisch, linear angetriebenes System ausgeführt ist. Dies hat den besonderen Vorteil, dass die Verschluss- und Öffnungsgeschwindigkeiten stufenlos geregelt werden können. Es ist dabei nicht erforderlich, dass das Steuerventil 50 zu 100 % dichtend ausgelegt ist, eine geringe Leckagemenge kann toleriert werden.

Mit der Reckstange 17a sind verschiedene Arbeitsweisen möglich, uns zwar beispielsweise das zeitgleiche Einbringen des Füllgutes, z.B. des Füllgutes 21 ohne CO₂-Gehalt oder mit reduziertem CO₂-Gehalt auf dem unteren Höhenniveau N1 über die Auslassöffnungen 47 und auf dem höheren Höhenniveau N2 über die Auslassöffnungen 49 in den Vorfcrmling 2 bzw. in den sich formenden Behälter 11. Hierfür ist das Steuerventil 50 durch entsprechende Ansteuerung von der Steuereinheit 53 für eine Verbindung der beiden Kanäle 46 und 48 geöffnet und weiterhin das Mehrwegedosierventil 22 durch die Steuereinheit 53 derart angesteuert, dass über dieses Dosierventil lediglich eine Verbindung zu der Flüssigkeitsverbindung 55 besteht. Dieser Betriebszustand ist in der Figur 9 dargestellt.

Bei geschlossenem Steuerventil 50 ist es weiterhin möglich, durch entsprechende Ansteuerung des Mehrwegedosierventils 22 über dieses Ventil für das Füllgut 21 eine Verbindung zu beiden Kanälen 46 und 48 herzustellen, sodass das Füllgut 21 wiederum entsprechend den Pfeilen über die Auslassöffnungen 47 und 49 auf den unterschiedlichen Höhenniveaus N1 und N2 in den Vorformling 2 bzw. in den sich formenden Behälter 11 eingebracht wird. In diesem in der Figur 10 dargstellten Betriebszustand besteht weiterhin die Möglichkeit, die dem inneren Kanal 46 zugeführte und aus den unteren Austrittsöffnungen 47 austretende Teilmenge des Füllgutes 21 in der Kühleinheit 44 zu kühlen, oder aber die Flüssigkeitsverbindung 54 für einen zeitlich folgenden Verfahrensschritt mit dem Füllgut zu kühlen.

Weiterhin besteht die Möglichkeit, durch entsprechende Ansteuerung des Mehrwegedosierventils 22 das Füllgut 21.1 über die Flüssigkeitsverbindung 54 im inneren Kanal 46 für den Austritt ausschließlich an den unteren Auslassöffnungen 47 bzw. auf dem Höhenniveau N1 und das Füllgut 21 für den Austritt ausschließlich an den oberen Auslassöffnungen 49 bzw. auf dem höheren Höhenniveau N2 auszubringen, wobei das Ausbringen des Füllgutes 21 und 21.1 entweder zeitgleich, zeitversetzt oder zeitlich überlappend erfolgt, und zwar bei einem zeitversetzten oder zeitlich überlappenden Ausbringen bevorzugt in der Form, dass zunächst über die oberen Auslassöffnungen 47 das Füllgut 21 und dann über die unteren Auslassöffnungen 49 das Füllgut 21.1 ausgebildet ausgebracht werden. Dieser Betriebszustand, bei dem wiederum ein Kühlen des Füllgutes 21.1 in der Kühleinheit 44 erfolgt, ist in der Figur 11 dargestellt. Selbstverständlich können die verschiedenen, in den Figuren 9 - 11 dargestellten Betriebszustände in der jeweiligen Form- und Füllphase beliebig kombiniert werden.

So ist es beispielsweise möglich, während der jeweiligen Form- und Füllphase in einer ersten Teil- oder Prozessphase entsprechend der Figur 9 das Füllgut 21 über die Auslassöffnungen 47 und 49 einzubringen, in einer zeitlich folgenden zweiten Teil- oder Prozessphase entsprechend der Figur 10 weiterhin das Füllgut 21 über die Auslassöffnungen 47 und 49 einzubringen und dabei zugleich die Flüssigkeitsverbindung 54 mit dem die Kühleinheit 44 durchströmenden Füllgut 21 vorzukühlen und dann entsprechend der Figur 11 in einer dritten Teil- oder Prozessphase über die unteren Auslassöffnungen 47 das Füllgut 21.1 einzubringen, wobei beispielsweise über die oberen Auslassöffnungen 49 weiterhin das Füllgut 21 ausgebracht wird.

In jedem der Fälle bildet sich zwischen den Höhenniveaus N1 und N2 eine beruhigte Zwischenzone aus, die die Füllgutanteile voneinander abgrenzt. Einen vorteilhaften Einfluss hat dabei das vorgenannte elektromagnetisch angetriebene Steuerventil 50, weil es ein impulsarmes und damit vermischungsarmes Umschalten ermöglicht. Ein weiterer Vorteil besteht bei diesem elektromagnetisch angetriebenen Steuerventil 50 darin, dass es sehr robust ist und zu Reinigungszwecken bei entsprechenden Reinigungszyklen, durch schnelles ggf. mehrfaches Schalten sehr leicht gereinigt werden kann.

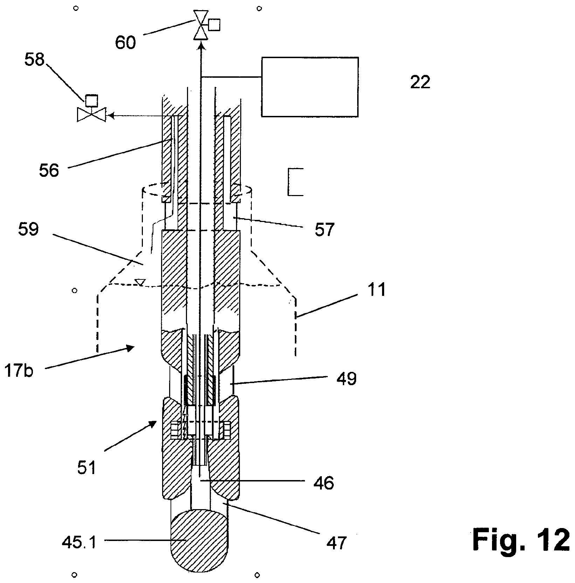

Die Figur 12 zeigt in vereinfachter Schnittdarstellung als weitere Ausführungsform eine Reckstange 17b, die sich von der Reckstange 17a im Wesentlichen nur dadurch unterscheidet, dass zusätzlich zu den beiden Kanälen 46 und 48 in einem oberen, dem Reckstangenende 45.1 weiter entfernt liegenden Bereich ein dritter ringförmiger Kanal 56 vorgesehen ist, der an mehreren um die Achse der Reckstange 17b verteilten Auslass- oder Entlastungsöffnungen 57 an der Umfangs- oder Mantelfläche der Reckstange 17b mündet. Über den Kanal 56 erfolgt beispielsweise gesteuert durch ein von der Steuereinheit 53 angesteuertes Steuerventil 58 nach dem Formen und Füllen des jeweiligen Behälters 11 das Entlasten des in dem Behälter 11 über dem Füllgutspiegel gebildeten Kopfraumes 59. Über die Auslassöffnungen 47 und bei geöffnetem Steuerventil 50 auch über die Auslassöffnungen 49 ist beispielsweise gesteuert durch ein z.B. von der Steuereinheit 53 angesteuertes: Steuerventil 60 eine weitere Entlastung des Behälters 11 nach dem Formen und Füllen möglich.

Die in den Figuren 10 - 13 dargestellten Reckstangen 17a bzw. 17b bzw. die diese Reckstangen aufweisenden Form- und Füllvorrichtungen oder -maschinen ermöglichen es auch, vor Einleitung der eigentlichen Form- und Füllphase jeweiligen Vorformling 2 zu evakuieren und/oder mit einem beispielsweise auch heißen Inert-Gas zu Spülen, und zwar bevorzugt über die unteren Auslassöffnungen 47.

Wie die Figuren 9 - 12 zeigen, sind die Auslassöffnungen 47 und 49 bzw. die Reckstange 17a an ihrer Umfangs- oder Mantelfläche so ausgebildet, dass die Hauptstrahlrichtung des aus den Auslassöffnungen 47 bzw. 49 austretenden Mediums gegenüber der Längsachse der Reckstange 17a in einem Winkel kleiner als 90° geneigt ist, und zwar an den unteren Auslassöffnungen 47 derart, dass dieser Winkel sich zu dem unteren Reckstangenende 45.1 öffnet und an den oberen Auslassöffnungen 49 derart, dass sich dieser Winkel zu der dem unteren Reckstangenende 45.1 abgewandten Ende der Reckstange 17a öffnet.

Die Auslassöffnungen 47 bzw. 49 weisen insbesondere abgerundete Kanten bzw. Radien auf, so dass lokale Turbulenzen und Kavitation vermieden wird und eine stabile Schichtung erfolgt. Vorteilhafterweise werden die abgerundeten Kanten der Auslassöffnungen 47 und 49 bei der Reckstange sowohl radial innen als auch radial außen vorgesehen.

### Bezugszeichenliste

- 1: Zuführvorrichtung
- 2: Vorformling
- 3: Übergaberad
- 4: Heizeinrichtung
- 5: Mündungsabschnitt
- 6: Heizelement
- 7: Transporteinrichtung
- 8: Übergaberad
- 9: Prozessrad
- 10: Form- und Füllstation
- 11: Behälter
- 12: Entnahmerad
- 13: Ausgabestrecke
- 14: Eingabeeinrichtung
- 15: Verschlusselement
- 16: Form - Abschottung
- 17: Reckstab oder Reckstange
- 17.1: Verengung
- 18: Kuppe der Reckstange
- 19: Boden des Vorformlings
- 20: Vorratseinrichtung
- 21: Füllgut
- 22: Mehrwegedosierventil
- 23: Innenraum der Reckstange
- 24: Auslassöffnung
- 25: Rückschlagventil
- 26: Entlüftungsventil
- 27: Auslassöffnung
- 28: Anschlusselement
- 29: Dichtung
- 30: Innenraum des Vorformlings
- 31: Ringspalt
- 32: Längsachse der Flasche bzw. Reckstange
- 33: Dichtelement
- 34: Gegenelement
- 35: Lager
- 36: Zuführöffnung
- 37: Form
- 38: Verschließeinrichtung
- 39: Greifer
- 40: Werkzeugträger
- 41: Drehachse
- 42: Leitung oder Leitungsstrecke
- 43: Karboriatisierungseinheit
- 44: Kühlungseinheit
- 45: Reckstangenkörper
- 45.1: Reckstangenende
- 46: Kanal
- 47: Auslassöffnung
- 48: Kanal
- 49: Auslassöffnung
- 50: Steuerventil
- 51: Verschlussring
- 52: Mangetspule
- 53: Steuerelektronik
- 54, 55: Flüssigkeitsverbindungen
- 56: Kanal
- 57: Auslassöffnung
- 58: Steuerventil
- 59: Kopfraum
- 60: Steuerventil
- 70: Zuführvorrichtung für Trockeneispellets
- 71: Vorratsbehälter für Trockeneispellets

## Patentansprüche

1. Verfahren zur Herstellung von mit einem flüssigen Füllgut gefüllten Behältern (11) aus Vorformlingen (2) aus einem thermoplastischen Material, wobei der jeweilige Vorformling (2) thermisch konditioniert und anschließend während einer Form- und Füllphase in einer Form (37) mit wenigstens einem flüssigen Füllgut (21, 21.1) als Druckmedium in den Behälter (11) umgeformt wird,
wobei das Füllgut (21, 21.1) oder Anteile des Füllgutes (21, 21.1) zumindest in zwei Zeitpunkten und/oder in zumindest zwei Prozessphasen mit unterschiedlichen Gehalten an Kohlendioxid und/oder mit unterschiedlichen Temperaturen zugeführt werden und wobei in der zweiten Prozessphase Trockeneis (71), insbesondere in Form von Pellets, zugeführt wird.

2. Verfahren nach Anspruch 1, **dadurch gekennzeichnet, dass** das Füllgut in einer ersten Prozessphase entgast zugeführt wird.

3. Verfahren nach Anspruch 1 oder 2, **dadurch gekennzeichnet, dass** in der auf eine erste Prozessphase zeitlich folgenden zweiten Prozessphase zumindest das Füllgut (21.1) oder der Anteil an Füllgut (21.1) mit der höheren Konzentration an Kohlendioxid zu geführt wird.

4. Verfahren nach einem der vorhergehenden Ansprüche, **dadurch gekennzeichnet, dass** der Vorformling (2) während seiner Umformung in den Behälter (11) mindestens zeitweilig durch eine Reckstange (17, 17a, 17b) geführt und in Achsrichtung gestreckt wird,

5. Verfahren nach Anspruch 4, **dadurch gekennzeichnet, dass** das Trockeneis in das Füllgut eingelegt oder in das Füllgut eingeschossen wird.

6. Verfahren nach einem der vorhergehenden Ansprüche, **dadurch gekennzeichnet, dass** das Füllgut (21.1) oder der Anteil an Füllgut (21.1) mit der höheren Konzentration an Kohlendioxid vor dem Einleiten gekühlt wird, und/oder dass in der zweiten Prozessphase das Füllgut (21.1) oder der Anteil an Füllgut (21.1) mit der höheren Konzentration an Kohlendioxid eine tiefere Temperatur als das Füllgut (21) oder der Anteil an Füllgut (21) der ersten Prozessphase aufweist.

7. Verfahren nach einem der vorhergehenden Ansprüche, **dadurch gekennzeichnet, dass** der Kohlendioxidgehalt des Füllgutes (21.1) oder des Anteils an Füllgut (21.1) in der zweiten Prozessphase 30 Gew.-% über dem Kohlendioxidgehalt des Füllgutes (21) oder des Anteils an Füllgut (21) der ersten Prozessphase liegt, vorzugsweise 50 bis 100 Gew.-% über dem über dem Kohlendioxidgehalt des Füllgutes (21) oder des Anteils an Füllgut (21) der ersten Prozessphase.

8. Verfahren nach einem einem der vorhergehenden Ansprüche, **dadurch gekennzeichnet, dass** die Temperatur des Füllgutes (21.1) oder des Anteils des Füllgutes (21.1) der zweiten Prozessphase kleiner als 10 °C beträgt, insbesondere zwischen 4°C und 8°C liegt.

9. Verfahren nach einem der vorgenannten Ansprüche, **dadurch gekennzeichnet, dass** der Druck des Füllgutes (21.1) oder des Anteils des Füllgutes (21.1), welches die höhere Kohlendioxidkonzentration und/oder die tiefere Temperatur aufweist, während der Form- und Füllphase oder während des Ausformungsprozesses mindestens zeitweise höher ist, als der der Druck mindestens eines anderen oder eines restlichen Anteils des Füllgutes (21), insbesondere um mindestens 1 bar höher ist.

10. Verfahren nach Anspruch 9, **dadurch gekennzeichnet, dass** der Druck auf einer Teilleitungsstrecke höher ist als der Druck des Füllgutes (21.1) oder des Anteils des Füllgutes (21.1), welches oder welcher die höhere Kohlendioxidkonzentration und/oder die tiefere Temperatur aufweist, und zwar während der Form- und Füllphase oder während des Ausformungsprozesses mindestens zeitweise um 2 bar bis 5 bar höher als der Druck mindestens eines anderen oder eines restlichen Anteils des Füllgutes (21).

11. Verfahren nach einem der Ansprüche 9 oder 10, **dadurch gekennzeichnet, dass** in dem Strömungsweg des innerhalb des Reckstabes (17) fließenden Füllgutes (21, 21.1) oder des Anteils des Füllgutes (21, 21.1) eine Drosselelement oder Querschnittsverengung (17.1) vorgesehen ist, wobei das Drosselelement insbesondere kurz vor dem mindestens einen Füllgutauslass (24) angeordnet ist.

12. Verfahren nach einem der vorgenannten Ansprüche, **dadurch gekennzeichnet, dass** ein Teil des Füllgutes (21) an der Reckstange (17) vorbei und ein Teil des Füllgutes (21) durch die Reckstange (17) hindurch zugeführt werden.

13. Verfahren nach einem der vorgenannten Ansprüche, **dadurch gekennzeichnet, dass** das stärker kohlendioxidhaltige Füllgut (21.1) oder der Anteil dieses Füllgutes (21.1) gekühlt werden,
und/oder
dass zumindest das stärker kohlendioxidhaltige Füllgut (21.1) oder der Anteil dieses Füllgutes (21.1) durch die Reckstange (17, 17a, 17b) hindurch zugeführt werden.

14. Verfahren nach einem der vorgenannten Ansprüche, **dadurch gekennzeichnet, dass**, die Reckstange (17, 17a, 17b) mindestens bereichsweise relativ zum Füllgut thermisch isoliert wird.

15. Verfahren nach einem der vorhergehenden Ansprüche, **dadurch gekennzeichnet, dass** in der ersten Prozessphase über wenigstens zwei Füllgutauslässe (47, 49) auf unterschiedlichem Höhenniveau (N1, N2) das Füllgut oder der Anteil des Füllgutes (21) ohne Kohlendioxid oder mit der reduzierten Konzentration an Kohlendioxid in den Vorformling (2) oder in den sich formenden Behälter (11) eingeleitet wird, und dass in der zeitlich folgenden zweiten Prozessphase der Form- und Füllphase zumindest das Füllgut (21.1) oder der Anteil an Füllgut (21.1) mit der höheren Konzentration an Kohlendioxid vorzugsweise auf einem niedrigeren Höhenniveau (N1) in den Vorformling (2) oder in den sich formenden Behälter (11) eingeleitet wird, wobei beispielsweise in der zweiten Prozessphase weiterhin auch das Einleiten des Füllgutes (21) oder des Anteils an Füllgut (21) ohne Kohlendioxid oder mit der reduzierten Konzentration an Kohlendioxid erfolgt, vorzugsweise auf einem höheren Höhenniveau (N2) oberhalb des niedrigeren Höhenniveaus (N1).

16. Verfahren nach Anspruch 15, **dadurch gekennzeichnet, dass** in einer dritten Prozessphase zwischen der ersten und zweiten Prozessphase durch das gekühlte Füllgut (21) oder den gekühlten Anteil an Füllgut (21) ohne Kohlendioxid oder mit der reduzierten Konzentration an Kohlendioxid ein Vorkühlen einer Flüssigkeitsverbindung (54) erfolgt, über welche in der zweiten Prozessphase das Füllgut (21.1) oder der Anteil des Füllgutes (21.1) mit der höheren Konzentration an Kohlendioxid zum Einleiten in den Vorformling (2) oder in den sich formenden Behälter (11) zugeführt wird.

17. Verfahren nach einem der vorhergehenden Ansprüche, **dadurch gekennzeichnet, dass** die Prozessphasen Teilphasen der Form- und Füllphase sind.

18. Vorrichtung zur Herstellung von mit einem flüssigen Füllgut (21, 21.1) gefüllten Behältern (11) aus Vorformlingen (2) aus einem thermoplastischen Material, mit einer Heizstrecke (4) zum Vorheizen der Vorformlinge (2), mit wenigstens einer eine Form (37) aufweisenden Form- und Füllstation (10), mit wenigstens einer Vorratseinrichtung (20, 20.1) zur Bereitstellung des Füllgutes (21, 21.1), wobei vorzugsweise eine Karbonatisierungseinheit (43) zum Einbringen oder Lösen von Kohlendioxid zumindest in einen Teilstrom des Füllgutes (21, 21.1) vorgesehen ist,
wobei die wenigstens eine Form- und Füllstation (10) mit wenigstens einer Einrichtung (70, 71) zur Zufuhr von Trockeneis, insbesondere in Form von Pellets, versehen ist.

19. Vorrichtung nach Anspruch 18, **dadurch gekennzeichnet, dass** die wenigstens eine Form- und Füllstation (10) mit wenigstens einer Ventileinrichtung (22) ausgebildet ist, über die das Füllgut (21, 21.1) oder Anteile des Füllgutes (21, 21.1) zu mindestens in zwei Zeitpunkten oder in zu mindest zwei Prozessphasen mit unterschiedlichen Gehalten an Kohlendioxid und/oder mit unterschiedlichen Temperaturen dem jeweiligen Vorformling (2) oder dem jeweils sich bildenden Behälter (11) zugeführt werden.

20. Vorrichtung nach Anspruch 18 oder 19, **dadurch gekennzeichnet,**
**dass** die Formstation (10) eine den Vorformling (2) während seiner Umformung in den Behälter (11) mindestens zeitweilig beaufschlagende Führungseinrichtung in Form einer Reckstange (17, 17a, 17b) aufweist und im Innenraum (23) der die Reckstange (17) mindestens eine Teil des Füllgutes (21) leitbar ist, wobei mindestens am unteren Ende der Reckstange (17, 17a, 17b) Auslassöffnungen (24, 47) vorgesehen sind.

21. Vorrichtung nach einem der Ansprüche 18-20, **dadurch gekennzeichnet, dass** eine Kühleinheit (44) entlang einer Leitung (42, 54) oder eine Leitungsabschnittes für dasjenige Füllgut (21.1) vorgesehen ist, in welchem stromabwärts, d.h. nach dem Kühlen und Durchströmen der Leitung (42) oder des Leitungsabschnittes Kohlendioxid gelöst wird oder welches der Leitung (42, 54) oder dem Leitungsabschnitt von der Karbonatisierungseinheit (43) zuströmt.

22. Vorrichtung nach einem der Ansprüche 18 - 21, **dadurch gekennzeichnet, dass** mindestens ein Leitungsabschnitt (42, 54), in dem das Füllgut (21.1) oder der Anteil des Füllgutes (21.1) mit dem hohen CO₂-Gehalt geführt wird, isoliert ist, insbesondere mit einer Isolierung, die aus Teflon oder aus einem teflonhaltigem Material besteht, und/oder dass zumindest der Leitungsabschnitt, in dem das Füllgut (21.1) oder der Anteil des Füllgutes (21.1) mit dem hohen CO₂-Gehalt geführt wird, isolierend ausgekleidet ist, beispielsweise mit Teflon oder aus einem teflonhaltigem Material.

## Claims

1. Method for producing containers (11) filled with a liquid filling material from preforms (2) made of a thermoplastic material,
wherein the respective preform (2) is thermally conditioned and subsequently moulded into the container (11) during a moulding and filling phase in a mould (37) with at least one liquid filling material (21, 21.1) as pressure medium,
wherein the filling material (21, 21.1) or parts of the filling material (21, 21.1.) are supplied at at least two points in time and/or in at least two process phases with different contents of carbon dioxide and/or at different temperatures and wherein dry ice (71), especially in the form of pellets, is supplied in the second process phase.

2. Method according to claim 1, **characterised in that** the filling material is supplied degassed in a first process phase.

3. Method according to claim 1 or 2, **characterised in that** at least the filling material (21.1) or the part of the filling material (21.1) with the higher concentration of carbon dioxide is supplied in the second process phase chronologically successive to a first process phase.

4. Method according to one of the previous claims, **characterised in that** while it is being moulded into the container (11), the preform (2) is at least temporarily guided through a horizontal bar (17, 17a, 17b) and stretched in the axial direction.

5. Method according to claim 4, **characterised in that** the dry ice is inserted into the filling material or injected into the filling material.

6. Method according to one of the previous claims, **characterised in that** the filling material (21.1) or the part of the filling material (21.1.) with the higher concentration of carbon dioxide is cooled prior to being introduced, and/or that in the second process phase, the filling material (21.1) or the part of the filling material (21.1.) with the higher concentration of carbon dioxide has a lower temperature than the filling material (21) or the part of the filling material (21) of the first process phase.

7. Method according to one of the previous claims, **characterised in that** the carbon dioxide content of the filling material (21.1) or of the part of the filling material (21.1) in the second process phase is 30 wt % above the carbon dioxide content of the filling material (21) or of the part of the filling material (21) of the first process phase, preferably 50 to 100 wt % above the carbon dioxide content of the filling material (21) or of the part of the filling material (21) of the first process phase.

8. Method according to one of the previous claims, **characterised in that** the temperature of the filling material (21.1) or of the part of the filling material (21.1) of the second process phase is less than 10 °C, especially is between 4 °C and 8 °C.

9. Method according to one of the previous claims, **characterised in that** the pressure of the filling material (21.1) or of the part of the filling material (21.1), which has the higher concentration of carbon dioxide and/or the lower temperature, is at least temporarily higher than the pressure of at least one other or a remaining part of the filling material (21) during the moulding and filling phase or during the moulding process, especially at least 1 bar higher.

10. Method according to claim 9, **characterised in that** the pressure on a branch pipe route is higher than the pressure of the filling material (21.1) or of the part of the filling material (21.1), which has the higher concentration of carbon dioxide and/or the lower temperature, namely during the moulding and filling phase or during the moulding process at least temporarily 2 bar to 5 bar higher than the pressure of at least one other or a remaining part of the filling material (21).

11. Method according to anyone of the claims 9 or 10, **characterised in that** a throttle element or a cross-sectional constriction (17.1) is provided in the flow path of the filling material (21, 21.1) flowing within the horizontal bar (17) or of the part of the filling material (21, 21.1), wherein the throttle element is especially arranged just before the at least one filling material outlet (24).

12. Method according to one of the previous claims, **characterised in that** one part of the filling material (21) is supplied past the horizontal bar (17) and one part of the filling material (21) is supplied through the horizontal bar (17).

13. Method according to one of the previous claims, **characterised in that** the filling material (21.1) containing more carbon dioxide or the part of this filling material (21.1) are cooled, and/or that at least the filling material (21.1) containing more carbon dioxide or the part of this filling material (21.1) are supplied through the horizontal bar (17, 17a, 17b).

14. Method according to one of the previous claims, **characterised in that** the horizontal bar (17, 17a, 17b) is thermally insulated relative to the filling material at least in some regions.

15. Method according to one of the previous claims, **characterised in that** the filling material or the part of the filling material (21) without carbon dioxide or with the reduced concentration of carbon dioxide is introduced into the preform (2) or into the forming container (11) through at least two filling material outlets (47, 49) at different height levels (N1, N2) in the first process phase, and that in the chronologically successive second process phase of the moulding and filling phase at least the filling material (21.1) or the part of the filling material (21.1) with the higher concentration of carbon dioxide is introduced into the preform (2) or into the forming container (11) preferably at a lower height level (N1), wherein for example in the second process phase the introduction of the filling material (21) or of the part of the filling material (21) without carbon dioxide or with the reduced concentration of carbon dioxide is furthermore also made, preferably at a higher height level (N2) above the lower height level (N1).

16. Method according to claim 15, **characterised in that** in a third process phase between the first and second process phase the cooled filling material (21) or the cooled part of the filling material (21) without carbon dioxide or with the reduced concentration of carbon dioxide pre-cools a fluid connection (54), through which the filling material (21.1) or the part of the filling material (21.1) with the higher concentration of carbon dioxide is supplied for the introduction into the preform (2) or into the forming container (11) in the second process phase.

17. Method according to one of the previous claims, **characterised in that** the process phases are subphases of the moulding and filling phase.

18. Device for producing containers (11) filled with a liquid filling material (21, 21.1) from preforms (2) made of a thermoplastic material, with a heating section (4) for pre-heating the preforms (2), with at least one moulding and filling station (10) comprising one mould (37), with at least one storage unit (20, 20.1) for providing the filling material (21, 21.1), wherein a carbonation unit (43) is preferably provided for introducing or dissolving carbon dioxide at least into one sub-stream of the filling material (21, 21.1), wherein the at least one moulding and filling station (10) is equipped with at least one means (70, 71) for supplying dry ice, especially in the form of pellets.

19. Device according to claim 18, **characterised in that** the at least one moulding and filling station (10) is configured with at least one valve means (22), through which the filling material (21, 21.1) or parts of the filling material (21, 21.1.) are supplied to the respective preform (2) or to the respective forming container (11) at at least two points in time or in at least two process phases with different contents of carbon dioxide and/or at different temperatures.

20. Device according to claim 18 or 19, **characterised in that** the moulding station (10) comprises a guiding device in the form of a horizontal bar (17, 17a, 17b) pressurizing the preform (2) during its moulding into the container (11) at least temporarily and at least one part of the filling material (21) can be guided in the interior space (23) of the horizontal bar (17), wherein outlet openings (24, 47) are provided at least at the lower end of the horizontal bar (17, 17a, 17b).

21. Device according to anyone of the claims 18 - 20, **characterised in that** a cooling unit (44) is provided along a pipe (42, 54) or a pipe section for the filling material (21.1) in which carbon dioxide is dissolved downstream, i.e. after the cooling and through-flow of the pipe (42) or of the pipe section, or which flows towards the pipe (42, 54) or the pipe section from the carbonation unit (43).

22. Device according to anyone of the claims 18 - 21, **characterised in that** at least one pipe section (42, 54), in which the filling material (21.1) or the part of the filling material (21.1) with the high CO₂ content is guided, is insulated, especially with an insulation which is made of Teflon or a material containing Teflon, and/or that at least the pipe section, in which the filling material (21.1) or the part of the filling material (21.1) with the high CO₂ content is guided, is lined with an insulative material, for example with Teflon or a material containing Teflon.

## Revendications

1. Procédé de fabrication, à partir de préformes (2) en un matériau thermoplastique, de récipients (11) remplis d'un produit de remplissage liquide, chaque préforme (2) étant respectivement thermiquement conditionnée, après quoi elle est transformée dans un moule (37) au cours d'une phase de moulage et de remplissage en un récipient (11) avec au moins un produit de remplissage liquide (21, 21.1) faisant office d'agent de pression, le produit de remplissage (21, 21.1) ou des fractions du produit de remplissage (21, 21.1) étant, à au moins deux moments et/ou au cours d'au moins deux phases du processus, amené(es) avec différentes teneurs en dioxyde de carbone et/ou à différentes températures, et de la glace sèche (71) étant introduite, notamment sous forme de pellets, au cours de la seconde phase du processus.

2. Procédé selon la revendication 1, **caractérisé en ce que** le produit de remplissage est introduit sous forme dégazée au cours d'une première phase du processus.

3. Procédé selon la revendication 1 ou 2, **caractérisé en ce qu'**au cours de la seconde phase du processus qui suit chronologiquement une première phase du processus, le produit de remplissage (21.1) ou la fraction de produit de remplissage (21.1) introduit(e) est au moins le produit ou la fraction de produit avec la concentration supérieure en dioxyde de carbone.

4. Procédé selon l'une des revendications précédentes, **caractérisé en ce que** la préforme (2) est, pendant sa transformation en récipient (11), temporairement au moins guidée et étirée en sens axial par une barre d'étirage (17, 17a, 17b).

5. Procédé selon la revendication 4, **caractérisé en ce que** la glace sèche est introduite ou injectée dans le produit de remplissage.

6. Procédé selon l'une des revendications précédentes, **caractérisé en ce que** le produit de remplissage (21.1) ou la fraction de produit de remplissage (21.1) avec la concentration supérieure en dioxyde de carbone est refroidi(e) avant l'introduction et/ou **en ce qu'**au cours de la seconde phase du processus le produit de remplissage (21.1) ou la fraction de produit de remplissage (21.1) avec la concentration supérieure en dioxyde de carbone a une température inférieure à celle du produit de remplissage (21) ou de la fraction de produit de remplissage (21) de la première phase du processus.

7. Procédé selon l'une des revendications précédentes, **caractérisé en ce que** la teneur en dioxyde de carbone du produit de remplissage (21.1) ou de la fraction de produit de remplissage (21.1) au cours de la seconde phase du processus est supérieure de 30 % en poids à la teneur en dioxyde de carbone du produit de remplissage (21) ou de la fraction de produit de remplissage (21) de la première phase du processus, et de préférence supérieur de 50 à 100 % en poids à la teneur en dioxyde de carbone du produit de remplissage (21) ou de la fraction de produit de remplissage (21) de la première phase du processus.

8. Procédé selon l'une des revendications **précédentes, caractérisé en ce que** la température du produit de remplissage (21.1) ou de la fraction de produit de remplissage (21.1) de la seconde phase du processus est inférieure à 10 °C et notamment comprise entre 4°C et 8°C.

9. Procédé selon l'une des revendications précédentes, **caractérisé en ce que** la pression du produit de remplissage (21.1) ou de la fraction de produit de remplissage (21.1) qui présente la concentration supérieure en dioxyde de carbone et/ou la température inférieure est, pendant la phase de moulage et de remplissage ou pendant le processus de formage temporairement au moins supérieure à la pression d'au moins une autre fraction ou d'une fraction restante du produit de remplissage (21), et notamment supérieure d'au moins 1 bar.

10. Procédé selon la revendication 9, **caractérisé en ce que** la pression sur une section partielle de conduite est supérieure à la pression du produit de remplissage (21.1) ou de la fraction de produit de remplissage (21.1) qui présente la concentration supérieure en dioxyde de carbone et/ou la température inférieure, à savoir temporairement au moins pendant la phase de moulage et de remplissage ou pendant le processus de formage supérieure de 2 bars à 5 bars à la pression d'au moins une autre fraction ou d'une fraction restante du produit de remplissage (21).

11. Procédé selon l'une des revendications 9 ou 10, **caractérisé en ce qu'un** élément d'étranglement ou une réduction de la section (17.1) est prévu(e) dans la voie d'écoulement du produit de remplissage (21, 21.1) ou de la fraction de produit de remplissage (21, 21.1) qui s'écoule à l'intérieur de la barre d'étirage (17), cet élément d'étranglement étant notamment disposé peu avant la (les) sortie(s) (24) du produit de remplissage.

12. Procédé selon l'une des revendications précédentes, **caractérisé en ce qu'une** partie du produit de remplissage (21) passe à côté de la barre d'étirage (17) et une partie du produit de remplissage (21) traverse la barre d'étirage (17).

13. Procédé selon l'une des revendications précédentes, **caractérisé en ce que** le produit de remplissage (21.1) avec la teneur en dioxyde de carbone la plus élevée ou la fraction de ce produit de remplissage (21.1) est refroidi(e),
et/ou
qu'au moins le produit de remplissage (21.1) avec la teneur en dioxyde de carbone la plus élevée ou la fraction de ce produit de remplissage (21.1) est amené à travers la barre d'étirage (17, 17a, 17b).

14. Procédé selon l'une des revendications précédentes, **caractérisé en ce que** la barre d'étirage (17, 17a, 17b) est en partie au moins thermiquement isolée par rapport au produit de remplissage.

15. Procédé selon l'une des revendications précédentes, **caractérisé en ce qu'**au cours de la première phase du processus le produit de remplissage ou la fraction de produit de remplissage (21) sans dioxyde de carbone ou avec la concentration réduite en dioxyde de carbone est introduit dans la préforme (2) ou dans le récipient en cours de formation (11) par au moins deux orifices de sortie du produit de remplissage (47, 49) à des niveaux de hauteur différents (N1, N2), et qu'au cours de la seconde phase du processus qui suit chronologiquement, la phase de moulage et de remplissage, au moins le produit de remplissage (21.1) ou la fraction de produit de remplissage (21.1) avec la concentration supérieure en dioxyde de carbone est introduit dans la préforme (2) ou dans le récipient en cours de formation (11) de préférence à un niveau de hauteur inférieur (N1), le produit de remplissage (21) ou de la fraction de produit de remplissage (21) sans dioxyde de carbone ou avec la concentration réduite en dioxyde de carbone étant par exemple également introduit pendant la seconde phase du processus et de préférence à un niveau de hauteur (N2) supérieur au-dessus du niveau de hauteur inférieur (N1).

16. Procédé selon la revendication 15, **caractérisé en ce que,** au cours d'une troisième phase du processus entre la première et la seconde phase du processus, le produit de remplissage (21) refroidi ou la fraction refroidie du produit de remplissage (21) sans dioxyde de carbone ou avec la concentration réduite en dioxyde de carbone entraîne une préréfrigération d'un raccord pour liquide (54) par lequel le produit de remplissage (21.1) ou la fraction du produit de remplissage (21.1) avec la concentration supérieure en dioxyde de carbone est amené pour être introduit dans la préforme (2) ou dans le récipient en cours de formation (11) au cours de la seconde phase du processus.

17. Procédé selon l'une des revendications précédentes, **caractérisé en ce que** les phases du processus sont des phases partielles de la phase de moulage et de remplissage.

18. Dispositif de fabrication, à partir de préformes (2) en un matériau thermoplastique, de récipients (11) remplis d'un produit de remplissage liquide (21, 21.1), avec une section de chauffage (4) pour le préchauffage des préformes (2), avec une station de moulage et de remplissage (10) présentant au moins un moule (37), avec au moins un dispositif de stockage (20, 20.1) pour la mise à disposition du produit de remplissage (21 , 21.1), une unité de carbonation (43) étant de préférence prévue pour l'introduction ou la dissolution de dioxyde de carbone dans au moins un flux partiel de produit de remplissage (21 , 21.1), la ou les stations de moulage et de remplissage (10) étant dotée(s) d'au moins un dispositif (70, 71) d'amenée de glace sèche, notamment sous forme de pellets.

19. Dispositif selon la revendication 18, **caractérisé en ce que** la ou les stations de moulage et de remplissage (10) est (sont) équipée(s) d'au moins un dispositif de valve (22) par lequel le produit de remplissage (21, 21.1) ou des fractions du produit de remplissage (21, 21.1) sont, à au moins deux moments ou au cours d'au moins deux phases du processus, amenés avec différentes teneurs en dioxyde de carbone et/ou à différentes températures dans la préforme (2) respective ou dans le récipient en cours de formation (11) respectif.

20. Dispositif selon la revendication 18 ou 19, **caractérisé en ce que** la station de moulage (10) présente un dispositif de guidage sous forme d'une barre d'étirage (17, 17a, 17b) qui agit sur la préforme (2) temporairement au moins pendant sa transformation en récipient (11), et **en ce qu'**une partie au moins du produit de remplissage (21) peut être conduite dans l'espace intérieur (23) de la barre d'étirage (17), des orifices de sortie (24, 47) étant prévus au moins à l'extrémité inférieure de la barre d'étirage (17, 17a, 17b).

21. Dispositif selon l'une des revendications 18 - 20, **caractérisé en ce qu**'une unité de refroidissement (44) est prévue le long d'une conduite (42, 54) ou le long d'une section de conduite pour le produit de remplissage (21.1) dans lequel du dioxyde de carbone est dissout en aval, c'est-à-dire après le refroidissement et le passage à travers la conduite (42) ou la section de conduite, ou lequel afflue dans la conduite (42, 54) ou la section de conduite en provenance d'une unité de carbonation (43).

22. Dispositif selon l'une des revendications 18 - 21, **caractérisé en c**e **qu'**une section de conduite (42, 54) au moins dans laquelle est conduit le produit de remplissage (21.1) ou la fraction de produit de remplissage (21.1) avec la teneur en CO₂ élevée est isolée, notamment avec une isolation en Téflon ou en un matériau contenant du Téflon, et/ou en ce qu'au moins la section de conduite dans laquelle est conduit le produit de remplissage (21.1) ou la fraction de produit de remplissage (21.1) avec la teneur en CO₂ élevée est garnie d'une isolation, par exemple en Téflon ou en un matériau contenant du Téflon.
